(19) Europäisches Patentamt
European Patent Office
Office européen des brevets

(11) EP 1 004 346 A1

(12) EUROPEAN PATENT APPLICATION

(43) Date of publication:
**31.05.2000 Bulletin 2000/22**

(51) Int Cl.[7]: **B01D 53/70**, F23J 7/00, F23J 15/00

(21) Application number: **99309366.5**

(22) Date of filing: **24.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.11.1998 JP 33479198**

(71) Applicants:
- **Maeda, Nobushige**
**Tokyo 177-0042 (JP)**
- **Mochigase Electric Technical Co., Ltd.**
**Yazu-gun, Tottori-ken 689-1201 (JP)**

(72) Inventor: **Maeda, Nobushige**
**Tokyo 177-0042 (JP)**

(74) Representative: **Rees, David Christopher et al**
**Kilburn & Strode**
**20 Red Lion Street**
**London WC1R 4PJ (GB)**

(54) **Dioxin generation depressant, method for production thereof, and method for depressing dioxin generation**

(57) A dioxin generation depressant capable of repressing dioxins generated by an incinerating treatment of waste is disclosed, which depressant is characterized by being a porous substance comprising at least one basis selected from the group consisting of calcined dolomite having magnesium oxide and calcium carbonate as main components and dolomite and a binding agent. A method for the production of the dioxin generation depressant, which is characterized by mixing at least one basis selected from the group consisting of calcined dolomite having magnesium oxide and calcium carbonate as main components and dolomite with a volatile component and a binding agent at a prescribed ratio, forming the produced mixture in a prescribed shape, and calcining the shaped mixture. The dolomite is procurable inexpensively and stably in a large quantity. By a simple procedure using the dolomite, the generation of dioxins can be repressed.



Printed by Jouve, 75001 PARIS (FR)

## Description

This invention relates to a novel dioxin generation depressant capable of depressing the generation of dioxin during the incineration of waste, a method for the production thereof, and a method for depressing the generation of dioxin by the use thereof. More particularly, this invention relates to a dioxin generation depressant which is capable of highly efficiently and effectively depressing the generation of harmful dioxins during the course of the incineration of organic chlorine compounds contained in household waste such as urban refuse, industrial waste such as spent oil, discarded plastic articles, and sludge, and industrial waste including such agricultural-constructional refuse as agricultural vinyl chloride resin materials, wall paper, building materials, and soft leather, a method for the production thereof, and a method for depressing generation of dioxins by the use thereof.

The dioxin which is attracting public attention as an environment polluting substance is a general term to be used in referring to dibenzoparadioxin polychloride (PCDDs), which comes in 75 homologs, depending on the number of substituting chlorine molecules and the places of substitution. The dibenzcfuran polychloride (PCDFs) which generally occurs in conjunction with the PCDDs and possesses a similar chemical structure and quality likewise comes in a group of compounds constituting themselves 135 homologs. Recently, various chlorine compounds have become the subject of discussion as substances associated with dioxin. Their evaluations are not necessarily established definitely. Since the dioxin-associated substances which are detected in the environment are generally complicated mixtures of homologs, the present specification proposes to treat both PCDDs and PCDFs, collectively as dioxins responsible for environmental pollution. Most of these compounds are exceptionally stable in the environment and highly toxic to living organisms and constitute themselves a group of substances totally devoid of usefulness for mankind. They have never been reduced to commercial production.

Dioxins, however, are by-produced as impurities, if only in a minute amount, during the production of a varying chemical substance such as, for example, an antiseptic like phenol chloride and are suffered to mingle into a finished product and find access to the market or leak directly from a plant engaging in the production as an effluent into the environment. Also in the disposal of industrial waste as by landfill, there are times when dioxins as impurities leak into infiltrating water and pollute the ground water. As a particularly important source of the generation of such dioxins, the thermochemical reaction of the type which is caused as in the incineration of urban trash may be cited. In concert with the growth of the modern chemical industry, the use of organic chlorine compounds has been increasing on the global scale. These substances, after aging, are discarded and put to disposal as household waste like urban trash or to segregated disposal as industrial waste. The fact that the incineration of such waste gives rise to dioxins has come to pose a serious problem. Particularly, in a country which has a small land and offers only few places for the disposal by landfill, the household waste is generally disposed of by means of incineration. A report has it that the incineration of solid urban waste is responsible for 78 - 88% of the amount of dioxins generated at all. In the 1994 survey, for example, the number of urban waste incinerators in Japan approximated closely to 2,000 and the annual total of the amount of waste disposed by incineration was 37, 000, 000 tons, a considerably large volume as compared with the annual totals reported in other countries. This annual total has been tending to increase year after year.

Besides, the practice of resorting the disposal of spent oil, discarded plastic articles, and sludge to incineration has been likewise in vogue. The disposal by incineration embracing the practice just mentioned forms the most significant source for generation of dioxins. The waste which arises from a medical institution is generally incinerated in a small incinerating plant installed in the premises of the medical institution. It is not perfectly safe to conclude that this plant is now being operated under a fully satisfactory management. The plant emits dioxins on the same level as the incinerator which handles solid urban waste. In the incineration of sludge mentioned above, the incineration of sewer sludge and paper sludge particularly participates in the formation of dioxins. The incineration of lumber treated with pentachlorophenol (PCP) or discarded lumber also generates dioxins.

Various research reports have been heretofore published concerning the mechanism of the generation of dioxins by the thermal reaction as in the incineration of urban waste. At present, the theory that the dioxins are formed when such compounds of small molecular weights as phenol chloride and benzene chloride resulting from the decomposition of organic substances are condensed at elevated temperatures or they are synthesized from a carbon skeleton and chlorine under the catalytic action of the surface of ash arising from the incineration as summarized in the "Type scheme of the generation of dioxins from an organic substance owing to the incineration of waste" represented by the use of the following scheme is finding general acceptance.

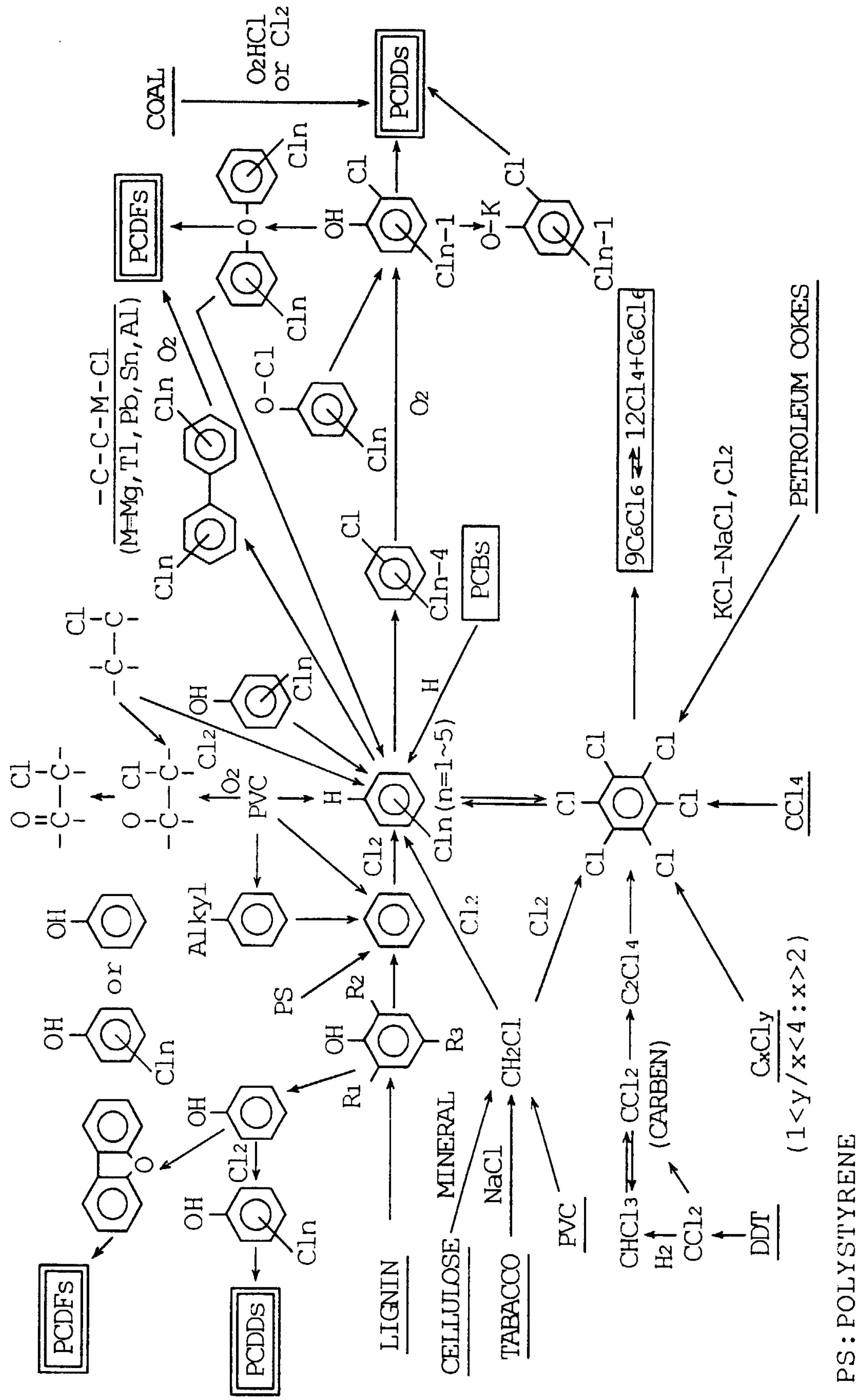
COAL
$O_2HCl$ or $Cl_2$
PCDDs
PCDFs
$-C-C-M-Cl$
(M=Mg, Tl, Pb, Sn, Al)
$O_2$
PCBs
H
$9C_6Cl_6 \rightleftarrows 12Cl_4+C_6Cl_6$
KCl-NaCl, $Cl_2$
PETROLEUM COKES
$O_2$
PVC
H
$Cl_2$
Alkyl
or
PS
$Cl_2$
$Cl_2$
$CCl_4$
$(1<y/x<4:x>2)$
$C_xCl_y$
$C_2Cl_4$
$CCl_2$
(CARBEN)
$CHCl_3$
$H_2$
$CCl_2$
DDT
$CH_2Cl$
MINERAL
NaCl
PVC
LIGNIN
CELLULOSE
TABACCO
PCDFs
PCDDs
PS: POLYSTYRENE

The first step toward depressing the discharge of dioxins generated during the incineration of waste resides in reducing the amount of the waste subjected to the incineration. It is important for the depression of the discharge of dioxins from the plant for waste incineration to repress to the fullest possible extent the generation of dioxins from a furnace or a boiler by ensuring complete combustion embracing the management of combustion and further promote measures in the system for waste gas treatment by combining various techniques.

For the accomplishment of the perfect combustion, the high combustion gas temperature, the ample gas retention time, and the thorough gas agitation-mixture with secondary air in the furnace are important requirements. The automatic combustion control which combines the technology of the furnace design with the fuzzy control for the fulfillment of these requirements has been already reduced to practice. This control, however, entails an increase in the running cost and in the expense of maintenance and management because it requires the combustion gas to be maintained at a high temperature. Further, it requires use of refractory materials excellent in high temperature resistance because it accelerates deterioration of the inner wall of a combustion furnace. The automatic combustion control which combines the technology of the furnace design with the fuzzy control cannot be easily accommodated by the existing incinerating furnace which has no use therefor or by the incinerating plant of a small scale. The accommodation, if tried at all, would call for highly expensive remodeling and the addition of this automatic control to the existing incinerating plant is not easily accomplished actually.

In the system for waste gas treatment, efforts are concentrated in the direction of lowering the temperature of treatment, exalting the ability to remove dust, and harnessing the action of adsorption. The techniques have been already developed for lowering the temperature of a bag filter, attaining the removal of dioxins by spraying powdered active carbon or by using an active carbon type adsorption column, the decomposition and removal of dioxins with a titanium-vanadium type catalyst or a precious metal type catalyst, and the reduction of discharge of dioxins by the use of a chemical inhibitor such as triethanol amine or an aqueous hydrogen peroxide solution. The methods for removing dioxins by lowering the temperature of a bag filter, spraying a powdered active carbon, or using an active carbon type adsorption column, however, are not capable of repressing the formation of dioxins. The active carbon cannot selectively adsorb dioxins. Since it adsorbs other components as well in the waste gas than dioxins, it has a short service life and must be frequently replaced with a new supply. Further, the disposal of the active carbon which has adsorbed the recovered dioxins requires use of an extra plant for intoxicating the adsorbate, this extra plant increases the number of steps till the final stage of treatment and adds proportionately to the cost of operation. The method for decomposing and removing dioxins with the catalyst mentioned above is incapable of repressing the generation of dioxins. It has been reported that a waste gas filter manufactured by uniformly dispersing or depositing particles of such precious metal as gold or iron oxide, several Angstroms in diameter, on active carbon fibers is capable of decomposing dioxins. Owing to the use of the catalyst of such a precious metal as gold, however, this filter inevitably suffers from a high cost. Further, this waste gas filter cannot be easily accommodated by the existing incinerating plant or by the incinerating plant of a small scale. The accommodation, if tried at all, would call for highly expensive remodeling and the adoption of this catalyst for the existing incinerating plant is not easily accomplished actually. Furthermore, it will be a very long time before this waste gas filter to practice is realized because problems such as those of precisely determining the durability of this filter remain yet to be solved.

The technique of reducing the discharge of dioxins by the use of the chemical inhibitor barely accomplishes the reduction of generation of dioxins and cannot repress this generation fully satisfactorily. Further, such chemical inhibitors as triethanol amine and aqueous hydrogen peroxide solution are relatively expensive and these chemical substances must be managed by persons well versed therein because they need to be handled and stored with considerable care. It is practically difficult to allocate experts authorized or to accommodate the equipment to a large number of incineration plants including urban waste incinerators and other small-scale incinerators and it is actually difficult as well to supply these chemical inhibitors in amounts necessary for the disposal of huge volumes of waste.

Heretofore, calcite has been used as an agent for repressing hydrogen chloride. The incinerator is in the habit of using this inhibitor at a step not preceding the second combustion chamber because it reacts with an inferior efficiency in the primary combustion chamber. Thus, the use of this inhibitor has not yet culminated in a measure which is capable of solving the problem of repressing the generation of dioxins.

Meanwhile, the so-called dolomite, a species of rock formed solely or mainly of the complex carbonate of calcium and magnesium, $CaMg(CO_3)_2$, after the step of mining, undergoes such steps as pulverization before it is used as a soil conditioner or a magnesic lime fertilizer in the field of agriculture. As things stand now, it is manufactured by calcination into a dolomite plaster or it is used as a raw material for plate glass, as a dolomite clinker for lining a steelmaking furnace, or a hearth stamp. It is fair to conclude that the dolomite ore and the calcined dolomite are produced or manufactured inexpensively in amounts ensuring fully satisfactory supply.

The present inventor has pursued a diligent study in search of a technique capable of repressing the generation of dioxins and with a view to fulfilling the object mentioned above. In consequence of this study, he has discovered that the dolomite and the calcined dolomite are useful for repressing the generation of dioxins and that the dolomite and the calcined dolomite, for the purpose of effecting the repression, are preferred to acquire more efficient contact

with the dioxins. Specifically, the object of this invention is accomplished by a novel dioxin depressant set forth in the following item (1) - (10), a method for the production thereof, and a method for repressing the generation of dioxins by the use thereof.

(1). A dioxin generation depressant capable of repressing dioxins generated by an incinerating or heating treatment of waste, characterized by being a porous substance having a pore volume determined by the mercury injection method in the range of 0.45 - 1.8 ml/g and

comprising at least one basis selected from the group consisting of calcined dolomite having magnesium oxide and calcium carbonate as main components and dolomite in the range of 35 - 65 wt. %, a binding agent in the range of 35 - 65 wt. %, and an activator formed of at least one member selected from the group consisting of titanium oxide and zinc oxide in the range of 5 - 15 wt. % based on the dioxin generation depressant.

(2) . A dioxin generation depressant according to Item (1), wherein said basis further comprises calcined dolomite having magnesium oxide and calcium oxide in the range of not more than 40 wt. % bases on the basis.

(3). A dioxin generation depressant according to Item (1) or Item (2), wherein said binding agent is a clayish mineral having silica and/or alumina as main components in the range of 100 - 40 wt. % based on the clayish mineral.

(4) . A dioxin generation depressant according to Item (1) or Item (2), wherein the BET specific surface area is in the range of 10 - 50 $m^2$/g.

(5) . A dioxin generation depressant according to Item (1) or Item (2), which is in the form of plates.

(6) . A dioxin generation depressant according to Item (1) or Item (2), which is in the form of particles having an average particle size in the range of 5 - 30 mm.

(7) . A method for the production of a dioxin generation depressant, characterized by mixing 100 parts by weight of a raw material comprising at least one basis selected from the group consisting of calcined dolomite having magnesium oxide and calcium carbonate as main components and dolomite and a binding agent formed of a clayish mineral having silica and/or alumina as a main component with 0.1 - 20 parts by weight of a volatile component and subsequently calcining the resultant mixture at a temperature in the range of 500 - 750°C.

(8). A method according to Item (7), wherein said volatile component is an aromatic compound.

(9). A method according to Item (7), wherein said raw material further contains an activator formed of at least one member selected from the group consisting of titanium oxide and zinc oxide in an amount in the range of 5 - 15 wt. % based on said raw material.

(10). A method for the repression of generation of dioxins, characterized by placing a dioxin generation depressor set forth in any of Items (1) - (6) in advance in an incinerate or a heating device and subjecting waste to an incinerating treatment or a heating treatment thereby effecting repression of dioxins generated in consequence of said treatment.

The invention may be carried into practice in various ways and some embodiments will now be described by way of example with reference to the accompanying drawings, in which:

Fig. 1 is a perspective view schematically illustrating a popular small·medium waste incinerator using the dioxin depressant of this invention.

Fig. 2 is a diagram schematically illustrating the left side of the popular small·medium waste incinerator shown in Fig. 1.

Fig. 3 is a schematic plan view of the popular small·medium waste incinerator shown in Fig. 1, particularly intended to show clearly the mode of embodying the dioxin depressant of this invention.

Fig. 4 is a schematic front view of the popular small·medium waste incinerator shown in Fig. 1, particularly intended to show clearly the manner in which the incinerator is burning the waste.

Fig. 5 is a schematic diagram of a water wall type combustion furnace, one version of the translation lattice incinerator which typifies the latest urban waste incinerator adapted to recover heat in the form of steam. The combustion furnace comprises three main parts, i.e. an inlet part (201 - 204) serving the purpose of feeding a raw material to a combustion part (205 - 209) and a treating part (210 - 213) serving the purpose of treating solid and gaseous incinerator effluents. The winding arrow mark (or solid line) found in the diagram depicts the flow of the waste from the inlet part to the combustion part and, after being divided therein in a solid and a gaseous effluent, thence to the treating part.

Fig. 6 is a diagram illustrating a testing apparatus to be used for determining the ratio of repellency.

(1) Dioxin generation depressant

The dioxin generation depressant of this invention is a dioxin generation depressant which is capable of repressing dioxins generated by the incineration of waste and which is characterized by being a porous substance comprising at least one basis selected from the group consisting of calcined dolomite having magnesium oxide and

calcium carbonate as main components and dolomite and a binding agent and is preferred to have (1) the basis further comprises calcined dolomite having magnesium oxide and calcium oxide as main components, (2) the binding agent further comprise clayish mineral having silica and/or alumina as a main component, and (3) the basis further comprise at least one activator formed of titanium oxide and zinc oxide. This dioxin generation depressant can repress the generation of dioxins in consequence of the incineration of waste because it is capable of decomposing and adsorbing the dioxins generated during the incineration of vinyl chloride and like chlorine compounds, the problem substances harassing the general public today, and hydrogen chloride, one of the raw materials thereof, and chlorine compounds and chlorine type gases.

The term "dolomite" as used herein refers to a species of rock formed solely or mainly of a complex carbonate of calcium and magnesium, $CaMg(CO_3)_2$. The dolomite has a characteristic property such that at 700 - 800°C, the $MgCO_3$ component thereof decomposes, liberates $CO_2$, and converts into the products of calcination of calcium carbonate ($CaCO_3$) and magnesium oxide (MgO) (hereinafter referred to simply as "calcined dolomite A") and, at 900 - 950°C, the $CaCO_3$ decomposes, liberates $CO_2$, and converts into the products of calcination of calcium oxide (CaO) and magnesium oxide (MgO) (hereinafter referred to briefly as "calcined dolomite B"). Thus, the expression "calcined dolomite having magnesium oxide and calcium carbonate as main components" refers to the calcined dolomite A" mentioned above and the expression "calcined dolomite having magnesium oxide and calcium oxide as main components" refers to the calcined dolomite B mentioned above. The simple term "calcined dolomite" is construed herein as embracing both the calcined dolomites A and B mentioned above.

First, the basis in the dioxin generation depressant of this invention has dolomite and/or the calcined dolomite A as an essential component in the range of 100 - 40 wt. %, preferably 100 - 50 wt. %, more preferably 100 - 60 wt. % based on the basis. It may use either of them singly or both of them in combination. When both of them are used in combination, the mixing ratio thereof does not need to be particularly restricted but may be arbitrarily selected. The basis mentioned above may further contain the calcined dolomite B as an arbitrary component. The proportion of the calcined dolomite B incorporated in the basis does not need to be particularly restricted but may be suitably decided, depending on the purpose for which the product is used. Properly, the proportion of the calcined dolomite B in the basis does not exceed 40 wt. % and preferably falls in the range of 20 - 35 wt. % based on the basis. If the proportion of the calcined dolomite B exceeds 40 wt. %, the proportion of the essential component will be limited possibly to the extent of preventing the peculiar effect of this invention, namely the decomposition-adsorption of dioxins and hydrogen chloride, one of the raw materials thereof, and chlorine compounds and chlorine type gases, from being attained fully satisfactorily. Incidentally, the calcined dolomite B possesses excellent antimicrobial and deodorant properties as compared with dolomite and the calcined dolomite A. When the dioxin generation depressant is used in a particulate form or partly contained in the ash of incineration, therefore, it manifests the antimicrobial and deodorant effects without possibly inducing the problem of environmental pollution due to emission of offensive odor. When the ash mentioned above is recovered and manufactured by firing into paving tiles for roads, for example, the excellent antimicrobial and deodorant properties of the depressant can be imparted to the recycled product.

The content of the basis in the dioxin generating depressant is 35 - 65 wt. %, preferably 40 - 50 wt. % based on the dioxin generation depressant. If the content of the basis is less than 35 wt. %, the peculiar effect of this invention, namely the decomposition·adsorption of dioxins and hydrogen chloride, one of the raw materials thereof, and chlorine compounds and chlorine type gases, will not be manifested fully satisfactorily and the generation of dioxins in consequence of the incineration of waste will not be repressed fully satisfactorily. Conversely, if the content of the basis exceeds 65 wt. %, the excess will be at a disadvantage in limiting the content of the other component such as, for example, the content of the binding agent possibly to the extent of lowering the strength of material.

The binding agent which is one of the essential component of the dioxin generation depressant of this invention does not need to be particularly restricted but may be arbitrarily selected from among varying binding agents known in the art. It specifically comprises a clayish mineral having silica and/or alumina in the range of 100 - 40 wt. %, preferably 100 - 50 wt. %, more preferably 100 - 60 wt. % based on the dioxin generation depressant.

The content of the binding agent mentioned above in the dioxin generation depressant is in the range of 35-65 wt. %, preferably in the range of 40 - 50 wt. % based on the dioxin generation depressant. If the content of the binding agent is less than 35 wt. %, the shortage will be at a disadvantage in preventing the inherent binding function from being manifested fully and keeping the material from acquiring the required strength fully. Conversely, if the content of the binding agent exceeds 65 wt. %, the excess will produce no proportionate addition to the already acquired inherent binding function and will be at a disadvantage in suffering the content of the binding agent to be unduly large and limiting the content of the basis and other components which are responsible for the manifestation of the inherent effect of this invention.

The dioxin generation depressant of this invention may further comprise an activator capable of adding the decomposing and adsorbing power to the function of the dioxin generation depressant. The activator does not need to be particularly discriminated but is only required to manifest the function mentioned above fully satisfactorily. It is preferred to comprise at least one member selected from the group consisting of titanium oxide and zinc oxide.

The content of the activator in the dioxin generation depressant is in the range of 5 - 15 wt. %, preferably in the range of 10 - 15 wt. % based on the dioxin generation depressant. If the content of the activator is less than 5 wt. %, the shortage will be at a disadvantage in preventing the inherent function of the activator from being manifested fully and keeping the material from enjoying a fully satisfactory addition to the decomposing and adsorbing power. Conversely, if the content of the activator exceeds 15 wt. %, the excess will be at a disadvantage in relatively lowering the content of the basis which is an essential component and the content of the binding agent to the extent of preventing the expected effect from being fully manifested.

The dioxin generation depressant of this invention may comprise necessary additives, depending on the intended use. The amounts of these additives may be properly decided within the range in which the functions possessed by the additives may be fully manifested. The content of the additives are in the range of 10 - 0.1 wt. %, preferably 7 - 1 wt. %, more preferably 5 - 2 wt. % based on the dioxin generation depressant.

Further, the dioxin generation depressant of this invention may additionally use or incorporate therein any of the known catalysts possessing the ability to decompose and the ability to adsorb dioxins such as, for example, titanium·vanadium type and precious metal type catalysts and conventional chemical dioxin depressants such as, for example, triethanol amine and aqueous hydrogen peroxide solution. The content of the catalyst is in the range of 10 - 0.1 wt. %, preferably 7 - 1 wt. %, more preferably 5 - 2 wt. % based on the dioxin generation depressant.

The amounts respectively of the components of the dioxin generation depressant of this invention incorporated in this depressant have been described. The sum of the amounts of these components is invariably 100 wt. %, without reference to the manner of combination thereof.

The dioxin generation depressant of this invention is characterized by being a porous substance. The pore volume of the porous dioxin generation depressant of this invention determined by the mercury injection method is in the range of 0.45 - 1.8 ml/g, preferably in the range of 0.5 - 1.0 ml/g. If the pore volume is less than 0.45 ml/g, the shortage will be at a disadvantage in preventing the ability to decompose and adsorb dioxins and hydrogen chloride, one of the raw materials thereof, and chlorine compounds and chlorine type gases from being manifested fully satisfactorily. If the pore volume exceeds 1.8 ml/g, the excess will be at a disadvantage in suffering the produced dioxin generation depressant to exhibit deficiency in strength, rendering a shaping work difficult, and limiting the mode of use. The pore volume specified by this invention corresponds to a pore diameter, 3.3 - $10^5$ nm, determined by the mercury injection method.

The specific surface area of the porous dioxin generation depressant of this invention determined by the BET method, though not particularly restricted, is generally in the approximate range of 10 - 50 $m^2/g$, preferably in the range of 20 - 50 $m^2/g$, and more preferably in the range of 31 - 40 $m^2/g$. If the specific surface area is less than 10 $m^2/g$, the shortage will be at a disadvantage in preventing the ability to decompose and adsorb dioxins and hydrogen chloride, one of the raw materials thereof, and chlorine compounds and chlorine type gases from being manifested fully satisfactorily. If the specific surface area exceeds 50 $m^2/g$, the excess will be at a disadvantage in suffering the particles forming the dioxin generation depressant and the pores occurring therein to have unduly small diameters and preventing the ability to decompose and adsorb dioxins and hydrogen chloride, one of the raw materials thereof, and chlorine compounds and chlorine type gases from being manifested fully satisfactorily.

(2) Method for production of dioxin generation depressant

The method for producing the dioxin generation depressant of the quality described above does not need to be particularly restricted. From the standpoint of producing this depressant in a porous form, the method of production described herein below proves preferable. This method of production of the dioxin generation depressant is characterized by mixing raw materials respectively containing at least one basis selected from the group consisting of calcined dolomite having magnesium oxide and calcium carbonate as main components and dolomite, a volatile component, and a binding agent at a prescribed ratio, forming the resultant mixture in a prescribed shape, and calcining the formed mixture.

In the raw materials which can be used for the method of production according to this invention, the raw materials of the components excepting the volatile component, i.e. the basis, binding agent, activator, and other additives are fated to form the components of the produced dioxin generation depressant. The kinds of these raw materials are identical with those of the components of the dioxin generation depressant already described above and, therefore, will be omitted from the following description to avoid repetition. Likewise, the contents of these components may be adjusted so as to account respectively for the contents in the produced dioxin generation depressant. It should be noted that the contents under discussion are based on the gross total amounts of the raw materials and, therefore, must pay due respect to the volatile component. The ranges that are allowed for these contents will be shown below. If these contents deviate from the ranges specified below, the departures will cause the produced dioxin generation depressant to encounter the same disadvantages as described above. Since these disadvantages have already described, they will be omitted from the following description to avoid repetition. The disadvantages from the viewpoint

of production which arise when the contents deviate from the ranges specified below will be described below.

First, the content of the basis is in the range of 35 - 65 wt. %, preferably in the range of 40 - 5 wt. %, based on the gross total of the weights of the raw materials. If the content of the basis is less than 35 wt. % or not less than 65 wt. %, the deviations will bring such problems of production such as impairing the formability of the product and preventing the product from acquiring an expected shape.

The content of the binding agent is in the range of 35 - 65 wt. %, preferably in the range of 40 - 50 wt. %, based on the gross weight of the raw materials. If the content of the binding agent is less than 30 wt. % or not less than 65 wt. %, the deviations will bring such problems of production such as impairing the formability of the product and preventing the product from acquiring an expected shape.

Then, the content of the activator is in the range of 5 - 15 wt. %, preferably in the range of 10 - 15 wt. %, based on the gross weight of the raw materials.

As respects the particle size of the basis, namely the particle sizes of the dolomite and the calcined dolomite, it is preferable to use the basis which has been pulverized to a size prescribed for the purpose of enabling the produced dioxin generation depressant to acquire the pore volume, the specific surface area, and the pore diameter peak defined above. To be specific, the average particle size of the basis is proper in the range of 5 - 35 micrometers, preferably in the range of 5 - 20 micrometers. If the average particle size of the basis is less than 5 micrometers, the shortage will be at a disadvantage in suffering the pulverization of dolomite of relatively hard constitution to incur a high cost, also suffering the pulverized dolomite to emit dust during the course of handling, and rendering it difficult for the produced dioxin generation depressant to acquire the pore volume, the specific surface area, and the pore diameter peak defined above. Conversely, if the average particle size exceeds 35 micrometers, the excess will be at a disadvantage in increasing the cost required for the adjustment of particle size, impairing the formability of the product possibly to the extent of rendering impossible the impartation of a required form to the product, and incurring difficulty in vesting the produced dioxin generation depressant with the pore volume, the specific surface area, and the pore diameter peak defined above. The method for obtaining dolomite and calcined dolomite which have the particle size defined above does not need to be particularly restricted. The dolomite can be obtained, for example, by extracting the rock from a mine, pulverizing the rock, and concentrating the resultant powder to obtain dolomite of an expected particle size.

Then, the calcined dolomite A can be obtained, for example, by extracting the rock from a mine, pulverizing the rock into dolomite having a prescribed size of not more than 50 micrometers, calcining the pulverized dolomite in a furnace by heating at a temperature in the range of 700 - 800°C, and concentrating the resultant powder to obtain calcined dolomite A of an expected particle size.

The calcined dolomite B can be obtained, for example, by extracting the rock from a mine, pulverizing the rock into dolomite having a prescribed size of not more than 50 micrometers, calcining the pulverized dolomite in a furnace by heating at a temperature in the range of 900 - 950°C, and concentrating the resultant powder to obtain calcined dolomite B of an expected particle size.

As respects the particle size of the binding agent mentioned above, it is preferable to use the binding agent which has a particle size prescribed for fulfilling the function of binding the other components so fast as to impart ample strength to the product of calcination and further allowing the produced dioxin generation depressant to acquire the pore volume, the specific surface area, and the pore diameter peak defined above. To be specific, the average particle size of the binding agent is proper in the range of 5 - 35 micrometers, preferably in the range of 5 - 20 micrometers. If the average particle size of the binding agent is less than 5 micrometers, the shortage will be at a disadvantage in suffering the binding agent to emit dust in the course of handling and rendering difficult the impartation of the pore volume, the specific surface area, and the pore diameter peak defined above to the produced dioxin generation depressant. Conversely, if the average particle size of the binding agent exceeds 35 micrometers, the excess will be at a disadvantage in rendering difficult the manifestation of the function inherent in the binding agent to a fully satisfactory extent.

As respects the particle size of the activator mentioned above, it is preferable to use the activator which has a size prescribed for activating the function thereof by an interaction with the basis mentioned above, activating the function of repressing the generation of dioxins to an exceptionally high degree, and permitting impartation of the pore volume, the specific surface area, and the pore diameter peak defined above to the produced dioxin generation depressant. To be specific, the average particle size of the activator is proper in the range of 5 - 35 micrometers, preferably in the range of 5 - 20 micrometers. If the average particle size of the activator is less than 5 micrometers, the shortage will be at a disadvantage in suffering the pulverization to incur much cost, tending to emit dust during the course of handling, and rendering difficult the impartation of the pore volume, the specific surface area, and the pore diameter peak defined above to the produced dioxin generation depressant. Conversely, if the average particle size of the binding agent exceeds 35 micrometers, the excess will be at a disadvantage in lowering relatively the specific surface area and rendering difficult the manifestation of the function of activation to a fully satisfactory extent.

The method of production contemplated by this invention is characterized by using as a raw material a volatile component which is vaporized under a calcining temperature or gasified by thermal decomposition. This method originates in the discovery that the use of the volatile component enables the produced dioxin generation depressant to manifest highly efficiently and effectively the active site capable of decomposing and adsorbing dioxins and hydrogen chloride, one of the raw materials thereof, and chlorine compounds and chlorine type gases, permit highly efficient contact between the waste gas component and the active site of the dioxin generation depressant for the sake of repressing the generation of dioxins, and realize a highly conspicuous ability to effect decomposition and adsorption. The method of production has also originated in the discovery that owing to the activity of decomposition and adsorption which exceptionally abounds in functionality, the produced dioxin generation depressant of this invention tolerates the use of the conventional general-purpose incinerator and prevents the generation of dioxins at a low incinerating temperature falling short of the temperature necessary for the thermal decomposition of dioxins, whereas it has been impossible heretofore to attain the thermal decomposition of dioxins unless the incineration is carried out at a high temperature in an expensive incinerator rated for high temperature and vested with high performance.

The volatile component mentioned above does not need to be particularly discriminated so long as it is capable of enabling the dioxin generation inhibitor obtained by calcination to manifest such a function as mentioned above. The volatile component which is separated by calcination as a component which is volatilized by evaporation or thermal decomposition can be properly utilized herein. To be specific, such a low molecular weight hydrocarbon compound as an optionally substituted aromatic compound which is vaporized during the course of calcination or volatilized by thermal decomposition may be effectively used as the volatile component. Advantageously from the viewpoint of design, ease of handling, and ecology, this volatile component preferably exhibits sublimity in a solid state at normal room temperature and more preferably avoids emitting offensive odor and doing harm to human bodies.

As concrete examples of the volatile component which answers this description, naphthalene, anthracene, anthraquinone etc. may be cited. These volatile components may be used either singly or in the form of a mixture of two or more members. When the volatile component is devoid of sublimity, the pores which are supposed to be formed by the volatile component are crushed into smaller pores owing to the exertion of the molding pressure during the course of liquefaction or the pressure of thermal deformation during the course of calcination. Consequently, the produced pores exhibit dispersion of size possibly to the extent of rendering difficult the impartation of the pore volume, the specific surface area, and the pore diameter peak defined above to the produced dioxin generation depressant.

The content of the volatile component is in the range of 0.1 - 20 parts by weight, preferably in the range of 0.3 - 20 parts by weight, and more preferably in the range of 0.5 - 20 parts by weight, based on the gross weight of the raw materials taken as 100 parts by weight. If the content of the volatile component is less than 0.1 part by weight, the shortage will be at a disadvantage in suffering the pores formed in consequence of the volatilization of the component by calcination possibly to render difficult the impartation of the pore volume, the specific surface area, and the pore diameter peak defined above. If the content of the volatile component conversely exceeds 20 parts by weight, the excess will be at a disadvantage in suffering the pores formed in consequence of the volatilization of the component by calcination possibly to render difficult the impartation of the pore volume, the specific surface area, and the pore diameter peak defined above and, depending on the form of the dioxin generation depressant which happens to have a large thickness as in brick, suffering the volatile component located in the central part of the material during the course of calcination gasifies within the duration of combustion, fails to leak from the material, solidifies again and remains in the material, and possibly blocks the pores. The excess is further at a disadvantage in not only adding unduly to the number of pores and consequently rendering difficult the retention of necessary strength but also suffering the calcination to emit a gas in such a large volume that the pressure of this gas may possibly deform the material, inflict a crack therein, and break it in an extreme case.

Since the particle size of the volatile component mentioned above exerts a significant influence on the impartation of high porosity to the dioxin generation depressant and especially dominates the magnitudes of the pore volume, the specific surface area, and the pore diameter peak defined above, the volatile component which has a prescribed size is preferably used. To be specific, the average particle size of the volatile component is in the range of 0.5 - 100 micrometers, preferably in the range of 0.5 - 5 micrometers. If the average particle size of the volatile component is less than 0.5 micrometer, the shortage will be at a disadvantage in suffering the pores formed in consequence of the volatilization of the component by calcination possibly to render difficult the impartation of the pore volume, the specific surface area, and the pore diameter peak defined above. Conversely, if the average particle size of the volatile component exceeds 100 micrometers, the excess will be at a disadvantage in suffering the pores formed in consequence of the volatilization of the component by calcination to render difficult the impartation of the pore volume, the specific surface area, and the pore diameter peak defined above and allowing the produced dioxin generation depressant to manifest necessary strength only with difficulty.

Then, the method of production contemplated by this invention comprises mixing the raw materials mentioned above at a ratio defined above, forming the resultant mixture in a prescribed shape, and calcining the formed mixture.

The mixing mentioned above does not need to be particularly discriminated with respect to the conditions and the device used therefor. It can be carried out by suitably utilizing any of the stirring or mixing devices known to the art such as, for example, a horizontal cylindrical mixer (fitted with internally disposed vanes), a V-shaped mixer (fitted with

stirring vanes), a double wall conical mixer, a ribbon type mixer, a rotary mixer provided with a uniaxial rod or pin, a biaxial paddle type mixer (pug mill), a conical screw mixer, a high-speed flow type mixer, a rotary disc type mixer, a muller mixer, an air current agitation type mixer, a non-stirring mixer, a twin arm type kneader, an internal mixer, a three-roll mixer, a continuous muller kneader, a Ko-kneader, a votator type kneader, a self-cleaning type kneader etc. Naturally, the mixing device does not need to be limited to the typical examples cited above. The mixing has only to mix the component raw materials homogeneously.

Then, the formation of the resultant mixture in the prescribed form does not need to be particularly discriminated with respect to the conditions and the device to be adopted therefor. Depending on the form of the dioxin generation depressant aimed at such as, for example, amorphous particulates, plates, or bricks, this formation can be accomplished by suitably utilizing any of various heretofore known forming (molding) devices employed as for the ceramic manufacture such as, for example, the devices intended for the method of extrusion molding which consists in extruding a material through a die by means of an extrusion press, the method of immersion molding which consists in depositing a material on a die, the method of die stamping which consists in placing a material in a die and stamp forming or press forming the material by means of a press forming machine or a hot press, and the method of cast molding which consists in placing a material in a die by means of slip casting. When a material of an amorphous form like a particulate substance is formed or subjected to size enlargement, it is preferable to carry out the mixing operation and the forming operation mentioned above by using a mulling device. The method of production according to this invention enjoys the advantage of attaining fully satisfactory pressure forming during the course of the forming operation mentioned above. The reason for this advantage is that even when the material is pressure formed till required strength, the impartation of a porous texture to the formed material is easily attained because the volatile component present in the formed material is volatilized during the course of calcination. Then the dioxin generation depressant does not use the volatile component conversely, the conditions for the pressure forming must be controlled rigidly so as to obtain the product of forming in porous state. In this case, the conditions of production are too hard to be practicable because the product of forming not only is too brittle to permit convenient handling but also has the possibility of sustaining a crack during the course of calcination.

Then, as respects the conditions for calcination, the calcining temperature is required to allow thorough liberation of the product of forming work from the volatile component and permit impartation of a thoroughly fusible state to the binding agent and avoid completely decomposing the carbonate group in the basis and calcining the material till calcined dolomite B. To be specific, the calcining temperature is in the range of 500 - 750°C, preferably in the range of 500 - 650°C, and the calcining time is in the range of 1 - 3 hours, preferably in the range of 1 - 2 hours. If the calcining temperature is less than 500°C or the calcining time is less than 1 hour, the shortage is at a disadvantage in preventing acquisition of fully satisfactory strength and fulfillment of the impartation of a porous texture to the product. Conversely, if the calcining temperature exceeds 750°C or the calcining time exceeds 3 hours, though the excess permits impartation of fully satisfactory strength and a porous texture, it is at a disadvantage in suffering part of the activator or the basis to undergo oxidation or decomposition to the extent of inducing disappearance of the carbonate group, melting metal, covering the surface of the basis, and decreasing the active points.

The device for calcination does not need to be particularly discriminated but may be suitably selected from the heretofore known heating devices plus forming devices and kneading devices which are furnished with a heating means.

(3) Formed body

The dioxin generation depressant of this invention which is a porous substance as described above can be formed in a varying shape, depending on the intended purpose. The shape does not need to be particularly discriminated but may be in any of the shapes which fit use in an incinerator. For example, it can be utilized as (1) such a shaped article as a plate which can be placed inside an incinerator so as to contact the exhaust gas component therein, (2) such a shaped article as a brick which can be used as an alternative for the refractory brick serving the purpose of lining an incinerator, (3) such a shaped article as grains of a prescribed particle size convenient for admixture with a waste to be burnt in an incinerator, and (4) such a shaped article as suitable for use as a filter material to be disposed in a smoke stack from an incinerator and used for removing harmful substances from the waste gas. Particularly, the shapes of (1) and (4) mentioned above which permit easy displacement and offer a long service life prove advantageous from the economic point of view.

(4) Method for repressing dioxin generation

The dioxin generation depressant according to this invention is characterized by having a given waste incinerated or heated in the presence thereof. Specifically, the use of the dioxin generation depressant of this invention is fulfilled by merely ensuring the existence thereof during the course of an incinerating or a heating treatment so as to

prevent the thermal reaction arising in the incineration of a waste from generating dioxins. It may be accomplished by adding the dioxin generation depressant in advance to the waste and subjecting the resultant mixture to the incinerating or heating treatment or by suitably adding the dioxin generating depressant in a proper amount to the waste which is being incinerated or heated. Naturally, these two methods may be used in combination. It is further allowable to have the dioxin generation depressant set in advance in the interior of an incinerator and the waste subsequently placed in the incinerator and subjected to the incinerating or heating treatment therein.

The reason for embracing the heating treatment in the preceding paragraph is the inventor's discovery of the fact that such a liquid waste as spent oil which contains such an organic chlorine compound as PCB, among other species of waste containing an organic chlorine compound and disposed heretofore by the incinerating treatment, can have the organic chlorine compound thereof such as PCB decomposed and converted into a harmless substance when it is subjected to a heating treatment at a low temperature in the presence of the dioxin generation depressant of this invention beside the incinerating treatment performed in an incinerator which fits this waste. To be specific, by the heating treatment at such a low temperature as falling in the approximate range of 50 - 200 °C, preferably 50 - 100 °C, more preferably 50 - 60°C, the chlorine component which is indispensable to the synthesis of harmful dioxins can be decomposed or removed. The spent oil which has undergone the low temperature heating treatment may be subsequently recycled by a refining treatment. When it is unfit for recyclization, it may be immediately subjected to the incinerating treatment without necessitating any measure against dioxins. Since this incinerating treatment possibly suffers a very minute amount of the organic chlorine compound such as PCB (polychloride biphenyl) to survive, the method of this invention is preferred to be additionally applied to the incinerating treatment.

The kinds of waste to which the dioxin generation depressant of this invention can be effectively applied include household waste such as ordinary urban refuse, waste building materials of soft leather, wall paper, and materials containing such an organic chlorine compound as PCP, and lumber, waste agricultural materials of hard or soft vinyl chloride resin, solid waste such as polluted soil containing such an organic chlorine compound as polychloride biphenyl and spent plastic articles, industrial waste such as spent oil containing such an organic chlorine compound as PCB, sewage sludge, and sludge from a paper mill, industrial waste embracing the waste from a medical institution, and waste containing an organic chlorine compound generating dioxins. The kinds of organic chlorine compound such as, for example, polyvinyl chloride, include those employed for the uses shown in Table 1 below and subsequently suffered to mingle into the urban refuse and those separately recovered as industrial waste.

Table 1

| Classification of uses | | Items |
|---|---|---|
| [Hard articles] | Flat plates | Industrial products (ducts, tanks, flanges, earthquake-proof tools), haberdasheries (articles for refrigeration, articles of stationery, articles for rolling stock, toys, displays, signboards), building materials, and agriculture |
| | Films and sheets | Non-food packages (blister packs, cases, light-weight containers), food packages (egg packs, soybean cake packs, fruit packs, cups, caps, partition trays), and other articles (industrial cooling towers, articles of stationery, toys and ornaments, agriculturals, and building materials) |
| | Corrugated plates | Building materials (terraces, sky lights, car ports, shades, barracks, enclosures, junk rooms, arcades) and agricultural articles (furrow boards) |
| | Pipes | Agricultural articles (water ducts, irrigation ducts, inundating water ducts, pesticide spray cloths), mining and manufacturing articles (plant piping and ventilators and waste water ducts in mines), articles for city water system (service water pipes and simplified water ways), electric wire ducts (indoor distributions and road illuminations), articles for telephone and telegraph services (pipes for telecommunication cables), building materials, articles for civil engineering (roads, railroads, golf grounds, sewerages, land development, water supply and waste water discharge in buildings, ventilation), and other articles (articles for fishery and pipes for hot water supply and waste water discharge) |

Table 1 (continued 1)

| Classification of uses | | | Items |
|---|---|---|---|
| [Hard articles] | Joints | | Joints for water supply pipes and waste water discharge pipes, valves, and flanges |
| | | | |
| | Others | Articles of profile extrusion | Building materials (ribs, panels, shades, rattan blinds, screen doors, window frames, deck materials, angles, and facing materials), household sundry goods (pen holders, slatted drainboards, bathtubs, rails), low current products (refrigerator frames and lighting devices), telephone materials (wiring ducts and wire protectors), and furniture and woodworks (edge pieces and hems) |
| | | Hollow shaped articles | Food bottles (for holding soy source, source, and vinegar) and non-food bottles (for holding cosmetic articles and shampoos) |
| | | Others | blind, disk records, telephone sets, and other hard products such as daily sundry goods and parts for electrical and mechanical tools |

Table 1 (continued 2)

| Classification of uses | | | Items |
|---|---|---|---|
| [Soft articles] | Films and sheets | Ordinary articles | Sundry goods (sundry goods, ornaments for furniture, articles of stationery, toys filled with air), packages (for foodstuffs and textiles), articles for rolling stock (sheets for automobiles), and covering materials (for timbers, metal products, paper products, and laminates) |
| | | Articles for agriculture | Farm tools, tools for handling vegetables, tools for handling paddy rice, and tools for handling tobacco plants |
| | Leather | | Products obtained by coating such substrates as cloth and paper with vinyl layers (inclusive of sponge leather), and leather products for rolling stock, furniture, building materials, briefcases and pouches, and articles of stationery |
| | Ordinary extruded articles | | Hose and tubes, gaskets, waterstop boards, and parts for mechanical implements |
| | Others | | Dolls, shoe soles, boots, gloves, tapes, sail cloth, and soft products other than those mentioned above |
| [Electric cables and others] | Electric cables | | Sheaths for electric cables (for telecommunication wires, cords, cables, and wiring) |
| | Flooring materials | | Articles for floors (tiles, flooring, and other flooring materials) |
| | Textile articles | | Clothes, fishing nets, fishing ropes, insect screens, fibers (flocculents), brushes, and others |
| | Others | | Coating materials (to be used as solved with a solvent) and soft and hard foamed products (floats, heat insulators, and cushioning materials) |

The amount of the dioxin generation depressant required for repressing generation of dioxins defies clear specification because the mechanism through which the generation of dioxins is repressed has not been fully elucidated. Since the results of the experiments of the working examples which will be described specifically herein below clearly indicate that the dioxin generation depressant possesses the ability to decompose and remove the chlorine component indispensable to the synthesis of harmful dioxins, it is safe to conclude that the generation of dioxins can be repressed by perfect removal of the chlorine component. The amount required mentioned above can be determined by the following theoretical calculation. The following was carried out on the assumption that the hydrogen chloride of the chlorine component emitted from the organic chlorine compound in the waste is neutralized by being decomposed by the dioxin generation depressant into water, carbon dioxide, and chloride. For this calculation, a vinyl chloride resin having a large chlorine proportion in the molecular unit thereof was used.

(1) One mol (62 g) of vinyl chloride emits 1 mol (36 g) of HCl through thermal decomposition. That is, 58 g of HCl is generated from 100 g of vinyl chloride.

$$CH_2CHCl \rightarrow C_2H_2 + HCl$$

(2) One mol of $CaCO_2$ or $MgCO_3$ neutralizes 2 mols of HCl

$$2\ HCl + CaCO_3 \rightarrow CaCl_2 + H_2O + CO_2$$

$$2HCl + MgCO_3 \rightarrow MgCl_2 + H_2O + CO_2$$

(3) The ratio of presence of CaO and MgO in the calcined dolomite B is as follows.

$$CaO/MgO = 66/34 \text{ (Ratio by weight)}$$

$$= 1.18/0.85 \text{ (molar ratio)}$$

The molar ratio mentioned above was found from the molecular weights of CaO and MgO. This ratio directly equals the molar ratio of $CaCO_3$ and $MgCO_3$ in the dolomite.

(4) From the premise of (3) above, it is found that 1.18 mols of $CaCO_3$ treats 2.36 mols of HCl. By the same token, 0.85 mol of $MgCO_3$ treats 1.7 mols of HCl.

(5) When 58 g (1.61 mols) of hydrogen chloride generated from 100 g of vinyl chloride is to be treated by itself, $CaCO_3$ and $MgCO_3$ are required each in an inviable amount accounting for 0.805 mol. These carbonates, when apportioned in the ratio of presence, 1.18/0.85, mentioned in (3) above, form a ratio of 0.47/0.34. By multiplying the members of this ratio respectively by the molecular weight, 100, of $CaCO_3$ and the molecular weight, 84, of $MgCO_3$, the masses of the carbonates forming this ratio are found as follows.

$$CaCO_3: 0.47 \times 100\ g = 47\ g$$

$$MgCO_3 = 0.34 \times 84\ g = 29\ g$$

Total: 76 g

The treatment of 100 g of vinyl chloride resin, therefore, requires 76 g of dolomite.

Generally, on the assumption that 100 tons of ordinary waste contains an average of about 5 tons of organic chlorine compound, the amount of the dioxin generation depressant which is required in the incineration of this waste for repressing generation of dioxins and converting them into a harmless substance is about 3.8 tons. This amount presumes that the dioxin generation depressant is formed wholly of dolomite. When the depressant contains such other component as activator besides the calcined dolomites A and B, the total amount of these components to be required may be found by carrying out the same calculation as mentioned above. Since this amount is variable with the ratio of inclusion of the chlorine compound and the kind of the chlorine compound and further since the theoretical

calculation mentioned above solely considers the function of removing the chlorine component and gives absolutely no consideration to the mechanism for the repression of generation, it is commendable to determine the amount required by performing a preliminary experiment of small scale based on the amount required which is derived from the theoretical calculation mentioned above.

The use or the supply of the dioxin generation depressant does not need to be particularly discriminated but may be decided in the optimum mode, depending on the form of the dioxin generation depressant specified above.

(1) Plate of dioxin generation depressant

As respects the manner of using the dioxin generation depressant which is in the form of a plate, for example, it is to be suitably selected depending on the kind of use intended. It suffices to adopt the manner of use which is most suitable for the particular type of incinerator to be actually used. Now, the manner of use will be specifically described below with reference to Figs. 1 - 5.

A waste incinerator of small to medium size, as illustrated in, comprises a furnace body 101, a smoke stack 102 disposed upright on the ceiling side of the furnace 101 and adapted to discharge the combustion gas generated during the combustion of waste given to be disposed by incineration, a waste inlet door 103 formed on the front side of the furnace 101 and adapted to admit the waste into the furnace 101, and an ash discharge door 104 disposed below the inlet door 103 and adapted to extract from the furnace 101 the ash which remains after the combustion of the waste. On each of the opposite lateral sides of the furnace 101, air suction mouths 105 for admitting air from outside the furnace 101 are formed. Since these air suction mouths 105 each have connected thereto an air suction pipe 105a opened in the lower direction, the ambient air of the furnace is taken through the air suction mouths 105 into the furnace via the air suction pipe 105a. Since the proximities of the openings of the air suction pipes 105a have the possibility of rising to a high temperature when the waste introduced through the waste inlet door 103 is put to combustion, covers 106 for protecting the openings are disposed fast on the furnace 101. A combustion chamber 101a inside the furnace 101 is provided, as illustrated in Fig. 2 and Fig. 4, on the ceiling side thereof with an exhaust mouth 102a for the smoke stack 102. Further, the furnace 101 is provided on the rear side thereof with an explosion-proof valve 110 which normally remains in a closed state and, when the air in the furnace should suddenly inflate, opens itself to release the entrapped air. Below this explosion-proof valve 110, an ash discharge door 104' for extracting the ash from behind the furnace is provided. The ash of the waste remaining after the combustion, therefore, is extracted through the ash discharge doors 104, 104'. The furnace is provided in the lower part of the interior thereof with a hearth 111 formed of a stainless steel mesh grid or a plate furnished with a plurality of throughholes and adapted to carry thereon the waste under treatment and allow the ash from the incineration to fall down. Below the air discharge mouth 102a, a supporting frame 108 having a cross section of the shape of three sides of a square is fixed as by welding to the furnace 101 and a metallic net 109 is mounted on the inner periphery of the supporting frame 108. This metallic net 109 is a rectangular net formed of a heat-resisting wire of stainless steel or titanium alloy. The supporting frame 108 is formed by welding an iron plate approximately in the shape of three sides of a square fast to the furnace 101 as illustrated in Fig. 3 and is provided at the center thereof an opening 108a. The metallic net 109 is mounted so as to cover the opening 108a of the supporting frame 108. When the interior of the furnace is heated to a high temperature in consequence of the combustion of a waste 112, the metallic net 109 is brought to a state of high temperature by the heating. The unburnt gas which occurs during the combustion of the waste ascends along the inner wall surface of the furnace, collides against the supporting frame 108, and circulates by convection in the neighborhood of the metallic net 109 as shown by the arrow mark in Fig. 4. As a result, the generation of the unburnt gas is prevented because the unburnt gas, owing to the elongation of the duration of convection flow thereof inside the combustion chamber, is caused to undergo secondary combustion on contact with the metallic net 109 which has been brought to the state of elevated temperature by the heating.

In the ordinary small to medium waste incinerator of the type described above, the plates of dioxin generation depressant 107 are mounted removably on suspending members 107a, 107b which are arrayed in two rows, suspended from the ceiling toward the lower part of the gas discharge mouth 102a, and formed of a metal such as iron or stainless steel or an alloy, with a gap interposed between the dioxin generating depressant 107 and the inner lateral surface of the furnace as illustrated in Fig. 3. A construction such that the combustion gas generated during the combustion of the waste is made to flow past the metallic net 109, through the gap mentioned above, and to the gas discharge mouth 102a of the smoke stack 102 may be cited as a concrete example. Each of the two rows may be formed of a plurality of plates of dioxin generation depressant 107. As respects the position of attachment, the upper part of the interior of the furnace illustrated in the diagram may be rated as advantageous from the viewpoint of the efficiency of contact with the combustion gas. Again in this case, the plates of dioxin generation depressant may be arrayed in one row or in a plurality of rows. Otherwise, they may be arrayed in a plurality of stages or on the lateral face part or the bottom face part. The modes of arrangement mentioned above, when necessary, may be used as suitably combined. The position does not need to be particularly discriminated but may be suitably selected, depending on the type of incinerator, so as to be exposed to the combustion gas. As respects the method of attachment, though a type allowing free

detachment is preferred, a fixed type may be adopted when necessary. The plates of dioxin generation depressant optionally may be formed in a meshed pattern and disposed as inside the smoke stack. It is safe to conclude that the mode of use of the dioxin generation depressant does not need to be particularly discriminated.

Similarly as regards the mode of using bricks of dioxin generation depressant, these bricks may be used as refractory bricks in the furnace of the waste incinerator illustrated in Figs. 1 - 4 mentioned above or the urban waste incinerator which will be specifically described herein below (Fig. 5) or as part of the wall members or block members in a smoke stack.

(2) Particulate of dioxin generation depressant

The mode of using particulates of dioxin generation depressant ought to be suitably selected, depending on the intended purpose. It suffices to adopt the mode of use which is most suitable for the type of incinerator.

Fig. 5 is a schematic diagram of a water wall type combustion furnace, one version of the translation lattice incinerator which typifies the latest urban waste incinerator adapted to recover heat in the form of steam. The combustion furnace illustrated in Fig. 5 comprises three main parts, i.e. an inlet part 201 - 204 serving the purpose of feeding a raw material to a combustion part 205 - 209 and a treating part 210 -213 serving the purpose of treating solid and gaseous incinerator effluents. Incidentally, the winding arrow mark (or solid line) found in the diagram depicts the flow of the waste from the inlet part to the combustion part and, after being divided therein into a solid and a gaseous effluent, thence to the treating part. In the lattice furnace, generally the waste fed to the furnace is first dried and preheated by the combustion gas at an elevated temperature and the heat radiated from the surface of the furnace covered with a refractory material. When the waste is further heated, thermally decomposed, and ignited, the gas generated in consequence of the thermal decomposition and the residual solid are simultaneously burnt. The air jet promotes and assists the mixture and combustion in the upper air gap. The lattice serves the purpose of supporting the waste, forwarding the underfiring air upward through the opening, transferring the ash of waste from the raw material drainpipe to the cooling zone, and stirring the layer so as to move the introduced waste to the surface of the lattice. In the case of the water wall type combustion furnace, one version of the translation lattice incinerator which typifies the latest urban waste incinerator adapted to recover heat in the form of steam, illustrated in Fig. 5, for example, when the waste is dropped into a waste dropping hole 101 from the inlet port of an open storage space 201, the dioxin generation depressant may be supplied in a proportionate amount into the incinerator from the storage part which may be additionally provided either externally or internally, whichever suits the occasion better, so as to be homogeneously mixed with the waste. Otherwise, the dioxin generation depressant may be supplied from the storage part into a shaking feeder 204 and then mixed therein with the waste to be brought into the shaking feeder 204 by a packing crane 203. Alternatively, the dioxin generation depressant may be supplied from the storage part to a drying lattice 205 which is one of the components of the combustion part and further supplied to the dry waste in the area of a combustion lattice 206 or supplied by scattering to the waste in the process of combustion. In the Fig.5, the number 207 means a moving lattice, 208 a burning up lattice, 209 a part of boiler, 21C a ditch of burned ash, 211 burned ash, 212 a electric dust collector, 213 chimney.

Then, in the case of the incineration of an industrial waste such as waste building materials of soft leather and wall paper and waste agricultural materials of hard or soft vinyl chloride resin, a translation lattice type incinerator may be used as an industrial waste incinerator and may be supplied with the same particles of dioxin generation depressant as used in the urban waste incinerator. The solid waste such as polluted soil containing such an organic chlorine compound as PCB or the liquid waste such as spent oil containing PCB, i.e. an organic chlorine compound, sewage sludge, or sludge containing the effluent from a paper mill may be treated by means of a rotary furnace, a multistage smith hearth, or a fluidized bed incinerator, with the particles of dioxin generation depressant used as added in advance to the waste under treatment.

Then, the solid waste such as polluted soil containing such an organic chlorine compound as PCB is preferred to be disposed by the incineration using the particles of dioxin generation depressant in the presence of an alkali catalyst or a carbon type catalyst. By performing the incineration in the presence of an alkali catalyst or a carbon type catalyst, it is made possible to dispose effectively of the solid waste at a low temperature of 300 - 350°C as compared with the conventional incinerating temperature of the neighborhood of 1000°C, effect repression of dioxins as aimed at, and deprive the soil of the harmful chlorine type compound such as PCB and regenerate a safe soil. Again in this case, the same translation lattice type incinerator as mentioned above may be used as the industrial waste incinerator, with the same particles of dioxin generation depressant as used in the urban waste incinerator supplied thereto. Preferably, this incineration may be performed by means of a rotary furnace, a multistage smith hearth, or a fluidized bed incinerator, with the waste dioxin generation depressant used as added in advance to the waste under treatment.

As concrete examples of the alkali catalyst which can be used herein, the catalysts of sodium hydroxide, potassium hydroxide, and lithium hydroxide may be cited. Active carbon may be cited as a typical example of the carbon type catalyst. The amount of such a catalyst to be used for manifesting the expected effect is in the range of 3

- 10 wt. % based on the amount of the organic chlorine compound in the waste. When the liquid waste such as spent oil containing an organic chlorine compound, i.e. PCB, a varying sort of sludge such as sewage sludge and sludge emanating from a paper mill is to be treated by the use of a rotary furnace, a multistage smith hearth, or a fluidized bed incinerator, the particles of dioxin generation depressant may be applied. The particles of dioxin generation depressant can be applied also when the liquid waste is subjected to a heating treatment using such a low temperature heating device as a reaction vessel. Again in this case, it is preferable to have the dioxin generation depressant added together with the liquid waste to the interior of a liquid tank of the reaction vessel and stirred therein to be homogeneously dispersed preparatorily in the liquid waste.

When the particles of dioxin generation depressant intended for application to the incinerator of the ordinary waste are added from above directly to the incinerating part of the incinerator, they are preferred to have a prescribed particle size. To be specific, the average particle size is in the range of 5 - 30 mm, preferably in the range of 10 - 20 mm. The reason for the lower limit of the range is that the particles of a smaller diameter have the possibility of being drifted by the phenomenon of convection within the combustion furnace, collected by a duster installed in the furnace, and suffered to clog the filter for screening the exhaust gas. The reason for the upper limit of the range is that the particles of a larger size render difficult quick dispersion or diffusion during the treatment of incineration. Owing to the adjustment of the particle size in the range specified above, the particles of dioxin generation depressant are enabled to acquire uniform dispersion thereof and increase the surface area of contact with such compounds of small molecular weight as phenol chloride and benzene chloride which occur in the furnace during the treatment of incineration, such compounds as possessing a carbon skeleton, and compounds of chlorine component and chlorine type gases.

Regarding the mechanism of reaction or catalysis through which the dioxin generation depressant of this invention acts to repress generation of dioxins, namely the mechanism for the repression of the generation of dioxins, how the properties owned by dolomite are changed by calcination to different properties and how the different properties respectively participate in the repression of the generation of dioxins are the questions yet to be elucidated. The compositions of dolomite and calcined dolomite and the properties thereof including composition, pH, emissivity, ratio of repellency, ratio of mildew-proofing, ratio of deodorization, and ratio of antimicrobial ratio are shown in Tables 2 and 3. The term "Igloss" found in Table 2 represents the ratios of decrease in the masses (wt. %) respectively of dolomite and calcined dolomite after 1050°C × 24 hours. The compositions of main components (wt. %) represent the numerical values invariably reduced to oxides. The methods for determination adopted in obtaining the data of Table 3 are identical with those shown in Table 4 of an example which will be specifically described herein below.

Table 2

| | Particle size (μm) | pH | Igloss (wt. %) | Compositions of main components (wt. %) | | | | |
|---|---|---|---|---|---|---|---|---|
| | | | | CaO | MgO | $SiO_2$ | $Al_2O_3$ | $Fe_2O_3$ |
| Dolomite | 5~20 | 9.8 | 47.2 | 31.5 | 21.0 | 0.1 | 0.1 | 0.1 |
| Calcined dolomite | 5~20 | 12.5 | 26.2 | 48.2 | 24.6 | 0.5 | 0.3 | 0.2 |

Table 3

| | Emissivity (%) | Ratio of repellency | Mildew-proofing ratio | Ratio of Deodorization (%) | | Antimicrobial ratio (%) | |
|---|---|---|---|---|---|---|---|
| | | | | Alkalinity | Acidity | E. coli. | Staphylococcus |
| Dolomite | 70.5 | - | - | - | - | - | - |
| Calcined dolomite | 90.0 | 75.0 | 3 | 80.0 | 85.0 | 99.5 | 99.0 |

In view of the absence of any discernible sign of discharge of a chlorine component such as hydrogen chloride which is one of the chlorine type gases indispensable to the formation of harmful dioxins as well as the absence of any discernible sign of occurrence of harmful dioxins in the working examples which will be specifically described herein below, the present inventor surmises that the dioxin generation depressant possesses a mechanism for the function manifested at least on chlorine components and further that the carbonate group or a carbonate in the composition of dolomite or calcined dolomite participates in some way or other in the mechanism. That is, the inventor infers that the mechanism in question is ascribable to the fact that the carbonate group or the carbonate in the dolomite or calcined dolomite fulfills the function of decomposing and adsorbing dioxins, the chlorine compounds such as hydrogen chloride which is one of the raw materials of dioxins, and the chlorine type gases.

He further infers that the dolomite has large power of decomposing and adsorbing because it has been produced by the secondary regeneration of carbonic acid. When the industrial waste which contains from the beginning a large amount of calcium carbonate, a carbonate, or a carbonate group is disposed of by incineration, the incineration is incapable of repressing the emission of dioxins and chlorine components. In contrast, when the incineration uses the dioxin generation depressant of this invention, the generation of dioxins and chlorine components and the emission thereof from the incinerator are repressed. The effect peculiar to this invention is not obtained by the incineration which is performed in the mere presence of the calcium carbonate of such ore as calcite. It is, therefore, inferred that the mechanism under discussion is complicated. The elucidation of the mechanism through which the dioxin generation depressant of this invention manifests the function thereof still awaits the outcomes of an elaborate study to be made in the future.

Incidentally, calcite and dolomite are rocks which closely resemble in composition but are widely different in terms of the presence of the carbonate of magnesium and the mode of origin. The dolomite, unlike the calcite which is directly formed from seawater as a primary ore, is produced after the carbonate once formed has been made through the agency of heat and pressure to undergo the secondary regeneration over a long course of history.

When the calcite is heated to an elevated temperature in the neighborhood of 900°C, therefore, it is transformed into calcium oxide. While the dolomite is likewise transformed into calcium oxide and magnesium oxide, part of it remains in a concentrated form as a carbonate group [$CaMg(CO_3)_2$]. It is inferred that the carbonate group containing Mg functions effectively on the hydrogen chloride. Since $CaMg(CO_3)_2$ which is a main component of the dolomite is a stable substance and is not easily dissolved in water, the reaction is not easily inhibited in the combustion chamber which allows the presence of steam.

Further, the Mg which coexists with the carbonate is an element which abounds in the reactivity with respect to Be among other alkaline earth metals. It is inferred that the element, when purified under specific conditions, gradually reacts in the combustion chamber and brings the action of continuously reacting effectively with hydrogen chloride. The reason for this inference is that while the calcite finds no acceptance because it reacts with poor efficiency in the primary combustion chamber as pointed out in the description of prior art, the depressant of this invention which contains dolomite and calcined dolomite exhibits an excellent quality from the low temperature zone through the high temperature zone and manifests the effect of repressing not less than 99% of the hydrogen chloride, a main substance responsible for the occurrence of dioxins, within the primary combustion chamber.

Effect

Since the dioxin generation depressant of this invention is only required to be a porous mass containing dolomite and/or calcined dolomite, it manifests an outstanding effect of repressing the occurrence of dioxins. It excels preeminently in economy because the dolomite can be procured stably in a large amount at an extremely low price from mines located in numerous countries including our country and can be easily manufactured into the finished product without requiring any special fabrication. It further obviates the necessity for using the existing filter for the removal of chlorine because it can manifest fully satisfactorily the effect of repressing the occurrence of chlorine components besides the effect of repressing the occurrence of dioxins as clearly noted from the results of the working examples cited above. It can be applied to the device for removal of chlorine in a chemical plant, for example. It can be applied to not only the repression of the occurrence of dioxins but also to a wide range of fields. Since the dioxin generation depressant of this invention, as clearly noted from the results of the working examples cited above, can manifest the effect thereof fully satisfactorily in the calcination performed at a low furnace interior temperature as compared with the conventional incineration not using the dioxin generation depressant, it further has the advantage of lowering the running cost and repressing the deterioration of the refractory material used in the furnace.

When the dioxin generation depressant of this invention which contains the calcined dolomite B is put to use in the calcination as mixed with the waste, it can manifest excellent antimicrobial and deodorizing effects because the components mentioned above are contained in the ash remaining after the calcination. When the ash is disposed of by landfill, these effects prevent the buried ash from exerting such adverse effects as offensive odor to the peripheral circumstances. When the ash is to be reclaimed, since it can manifest the antimicrobial and deodorizing effects, it may

be caked with other recycling resin material and used for manufacturing tiles intended for paving the ordinary pedestrian roads.

The dioxin generation depressant of this invention, for the purpose of disposing the water by an incinerating or a heating treatment, is only required to be present at the site of the treatment. By a very simple procedure, therefore, it can repress the occurrence of dioxins during the incineration of the waste. It offers an epochal solution to the problem of the pollution of the environment with dioxins discharged from the urban waste and to the problem of growing pollution of human bodies caused by exposure to the polluted environment because it can immediately accommodate itself to all the existing waste incinerators with a slight remodeling.

Further, this invention can be widely applied to the incineration of a varying sort of waste including the solid waste such as polluted soil containing PCB, i.e. an organic chlorine compound, the liquid waste such as spent oil, and the industrial waste such as discarded plastic materials, various sorts of sludge like sewage sludge and the effluent from a paper mill, lumber impregnated with pentachlorophenol (PCP), and discarded materials. Besides, it can be fully satisfactorily applied to the incineration of the waste from a medical institution by the use of an incinerator of small scale installed in the premises of the medical institution. This incineration may well be rated as highly efficient in fulfilling the effect thereof even when the operation of the incinerator is not very satisfactory and the incinerating temperature is low.

This invention only requires the presence of the dioxin generation depressant for effectively carrying out the heating treatment at the low temperature. It, therefore, enjoys an unusual advantage of accomplishing the removal of harmful polluting substances contained in the waste without requiring the waste to be heated to a high temperature fit for thermochemical reaction responsible for the synthesis of dioxins. The heating treatment at the low temperature, when necessary, can be attained as by the addition of an alkali catalyst. This treatment is highly advantageous because it can remove such harmful polluting substances contained in the waste.

The ash which emanates from a varying type of incinerator is inhabited by microorganisms of a great number falling in the approximate range of 7.5 - 8.0 $\times$ $10^6$/g. The ash containing the dioxin generation depressant of this invention possesses the power of resisting microorganisms and, therefore, enjoys the advantage of disabling the survival of microorganisms.

Further, the method of production contemplated by this invention is highly useful because it uses a raw material which contain a volatile component besides the basis such as dolomite and a binding agent and further because it can form the porous dioxin generation depressant very easily by following the conventional method for production of ceramic with necessary modifications.

EXPERIMENTS

Now, this invention will be described more specifically below with reference to the working examples thereof.

Example 1

As the components of a basis, dolomite powder having a particle size of 5 - 20 micrometers, a calcined dolomite A powder having a particle size of 5 - 20 micrometers, and a calcined dolomite B powder having a particle size of 5 - 20 micrometers were uniformly mixed at a mixing ratio of 30 wt. % of the dolomite, 35 wt. % of the calcined dolomite A, and 35 wt. % of the calcined dolomite B to manufacture the basis. The characteristic properties of the produced basis are shown in Table 4 below. The mixture was performed by the use of a ribbon mixer.

Table 4

| | Surface area ($m^2$/g) | pH | Emissivity (%) | Ratio of deodorization (%) | | Antimicrobial ratio (%) | |
|---|---|---|---|---|---|---|---|
| | | | | Alkalinity | Acidity | E.coli. | Staphylococcus |
| Basis | 9.8 | 10.5 | 92.0 | 91.5 | 96.5 | 98.5 | 98.0 |

The terms "emissivity," "radio of deodorization," and "antimicrobial ratio" used in Table 4 above have been determined as follows.

(1) The emissivity (%) was determined by comparing the magnitudes of emissivity of a virtual black body and a given sample (manufactured in the shape of a plate, 20 $\times$ 30 $\times$ 2 mm) by the infrared method (spectrometer made by Nippon Bunko Kogyo K.K.). More particularly, the temperature of the surface of the sample was increased up to the prescribed temperature (100°C) and compared with the virtual black body thereof.

(2) The ratio of deodorization (%) was determined by placing 1 g of a given sample and 600 ml of a malodorous

gas in a tetra bag, allowing the two substances to stand for three hours in the bag, measuring a change in the gas concentration before and after the standing, and calculating the following formula incorporating the found change therein as a factor. The species of gas used for the test were ammonia as an alkaline gas and hydrogen sulfide as an acidic gas. Incidentally, the gas concentration of ammonia was determined by the absorptiometric method or with a potentiometer and that of hydrogen sulfide with a gas chromatographic analyzer or a flame photometer.

$$\text{Ratio of deodorization (\%)} = ((\text{Blank gas concentration} - \text{sample gas concentration}) / (\text{Blank gas concentration})) \times 100$$

(3) The antimicrobial ratio (%) with respect to E. coli was determined by the agar culture medium method. To be specific 1 plutinum loop of the E. coli which had been cultured on an agar culture medium at 37°C for 16 hours was added to 50 ml of sterilized physiological saline water. The E. coli was shaken cultured on the saline water at 37°C for 8 hours and the resultant E. coli solution was dispensed in a fixed volume of 10 ml into three test tubes. One of the test tubes was charged with 0.5 g of a dolomite sample and another of them was charged with 0.5 g of a calcined dolomite sample. The remaining tube as a control was continuously shaken cultured at 37°C for 8 hours and then left standing at rest for three hours. Then, the E. coli consequently grown in these test tubes were counted. The antimicrobial ratio with respect to staphylococcus was determined by the compression contact method. To three sample films, one adding dolomite, another adding calcined dolomite, and the remainder omitting such addition, yellow staphylococcus was initially inoculated in a fixed amount of 150000 cells/ml. The sample films were left standing for 24 hours and the Satphylococcus consequently grown thereon were counted.

The method of "Ratio of repellency" and "Mildew-proofing ratio" shown at the table 3 are explained as follows:

(4) The test apparatus for the ratio of repellency (%) comprised a plastic container (5) having an internal volume of 1.5 liters and seven glass petri dishes each having an inside diameter of 3 cm and circularly arranged mutually contiguously inside the container as illustrated in Fig. 6. In the centrally located petri dish (1), acarinas were solely introduced intra vitam. The intra vitam introduction was effected by spreading 0.15 g of a culture medium fully growing acarinas on the petri dishes, allowing the culture medium to stand at rest for two minutes, then blowing the bate from the petri dishes, selecting only the petri dishes allowing adhesion thereto solely of acarinas, and putting them to use in the test. After three replications of the test for precaution's sake, the petri dishes were examined to take count of the live acarinas. For the test, about 4300 live acarinas were used. In the six peripherally and contiguously arranged petri dishes, the test specimens of a processed area (2) and those of a control area (3) were laid alternately. A cloth sprayed calcined dolomite is a proportion of 10 wt. % (about 36 mg) was spread in each petri dish, on a processed area (2), and untreated cloth was spread in each petri dish on a control area (1). To the center of the crowd of test specimens, 0.01 g of bait for attracting acarinas was introduced. The bait used herein was manufactured by mixing a powder feed for experimental animals and dried yeast at a ratio of 1 : 1. This bait was identical with the bait in the culture medium which was used for breeding successive generations of acarinas. An adhesive sheet (6) was laid around the petri dishes to prevent external acarinas from entering the petri dishes. A vial containing saturated salt water (4) was placed in the plastic container to keep the interior thereof at about 75% RH. The test apparatus described above was manufactured for each population of test specimens and preserved at a constant temperature of 25°C.

The potency of repellency was determined after the test specimens had been left standing overnight in the petri dishes by comparing the numbers of acarinas which moved meanwhile respectively to the petri dishes. The ratio of repellency was calculated from the following formula using the total numbers of acarinas which moved to three petri dishes of the processed area (2)or the control area (3). Where the relation, control area (3) < processed area (2), was found, the ratio of repellency was reported as 0% for the sake of convenience. The acarinas which moved to the petri dishes were detected on "the test specimens and the samples" and "the inner face of the petri dish" and the acarinas under test were extracted by the method of washing and observed under a laboratory microscope to take count thereof. All the acarinas which had moved at all to the petri dishes were counted without discriminating between live and dead acarinas.

Ratio of repellency = (Number of acarinas which moved

to the control area - Number of acarinas which moved to the

processed area)/(Number of acarinas which moved to the

control area) × 100

(5) The Milew-proofing ration(%) was determined in accordance with the "Method for testing mildew resistance" specified by Japanese Industrial Standard (JIS) Z-2911. To be specific, the culture medium : sample and the test specimen were processed in accordance with the respective specifications and, after inoculation of specified mildew thereto, cultured as preserved under the specified conditions. The inoculation of mildew to the culture medium : the sample and the test specimen was effected by uniformly sprinkling a liquid spore suspension on the surface of a given test specimen by the use of a sprayer or a pipet. The results of test were determined by observing with unaided eyes the conditions of growth of mycels on the surfaces of the samples and the test specimens in consequence of culture and rating the found magnitudes of antimicrobial capacity by the following method using a three-point scale, wherein

3: No discernible sign of growth of mycels in the inoculated part of a given sample or test specimen.
2: The surface area of the part showing a discernible sign of growth of mycels in the inoculated part of a given sample or test specimen not exceeding 1/3 of the total surface area.
1. The surface area of the part showing a discernible sign of growth of mycels in the inoculated part of a given sample or test specimen exceeding 1/3 of the total surface area.

Then, a raw material was prepared by uniformly mixing and processing a varying basis obtained as described above, a binding agent formed of a clayish mineral having silica and alumina as main components (made by Kyoritsu Yogyo K.K.), an activator formed of titanium oxide and zinc oxide [titanium oxide : zinc oxide = 1 : 1 (mixing ratio by weight); made by Sakai Kagaku K.K.], and a volatile component formed of naphthalene (made by Kawasaki Kasei Kogyo K.K.). These components are identified in the following table, with their particle sizes and their proportions in the mixture additionally shown therein.

Table 5

| | Kind | Average particle size (μm) | Proportion in mixture (wt. %) |
|---|---|---|---|
| Basis | Dolomite | 5~20 | 14 |
| | Calcined dolomite A | 5~20 | 17 |
| | Calcined dolomite B | 5~20 | 17 |
| Binding agent | Clayish mineral | 5~15 | 45 |
| Activator | Titanium oxide, zinc oxide | 5~15 | 7 |

The amount of the volatile component (naphthalene) added in this case was 0.4 parts by weight, based on the total amount of the basis, the binding agent, and the activator, providing that the sum, basis + binding agent + activator, was taken as 100 parts by weight. The volatile component had an average particle size of 5 μm.

The raw material obtained by mixing the components mentioned above was molded with a molding machine (made by Ootake Seramu K.K.) to produce plates measuring 300 × 300 × 15 mm. Then, the plates were calcined in a heating oven (made by Ootake Seramu K.K.) at 630°C for 1.2 hours to manufacture plates of dioxin generation depressant. The produced dioxin generation depressant was tested for specific surface area and pore volume. The results of this test are shown in Table 6 below. Further, the depressant was tested for other properties. The results of this test are shown in Table 7 below.

Control 1

Plates of dioxin generation depressant for comparison were manufactured by following the procedure of Example 1 while omitting the use of a volatile component to the raw material. The produced dioxin generation depressant was tested for specific surface area by the BET method and for pore volume by the mercury injection method. The mercury injection method, which is based on the theorem that the amount of mercury injected into pores depends on the pore size, r, and the pressure, P, consists in performing analysis in accordance with the following formula presuming a cylinder.

$$rP = -2\sigma \cos \theta$$

wherein σ represents the surface tension of mercury and θ the angle, 140°, of contact with solid. The results are shown in Table 6 below.

Table 6

| | Volatile component | Specific surface area ($m^2/g$) | Pore volume (ml/g) |
|---|---|---|---|
| Example 1 | Added and mixed | 32.0~35.0 | 0.50~1.50 |
| Control 1 | Addition omitted | 30.0 | 0.4 |

Table 7

| Dioxin generation depressant | pH | Emissivity (%) | Ratio of deodorization (%) | | Antimicrobial ratio (%) | |
|---|---|---|---|---|---|---|
| | | | Alkalinity | Acidity | E. coli | Staphylococcus |
| Example 1 | 9.5 | 93.0 | 92.5 | 97.5 | 98.5 | 98.0 |

The properties, i.e. emissivity, radio of deodorization, and antimicrobial ratio, shown in Table 7 above were

determined in the same manner as those shown in Table 4.

Example 2

The raw material used in Example 1 was molded with a molding machine (made by Ootake Seramu k.K.) to obtain particles, 0.5 - 1 mm in particle size, and the particles were calcined in a heating oven (made by Ootake Seramu K.K.) at 630°C for one hour and the calcined particles were classified with sieves to manufacture a particulate dioxin generation depressant, 2 - 5 mm in particle size.

Example 3

Two plates obtained in the same manner as in Example 1 were fixed to the upper part of the interior of a general-purpose small to medium waste incinerator (made by Mochigase Electric Technical Co., Ltd.) as illustrated in Fig. 3. In this incinerator, 100 kg of solid urban waste containing 5 kg of vinyl chloride was placed and incinerated therein at a furnace interior temperature of 650°C. At proper intervals following the start of combustion, the effluent gas of the incinerator was collected and tested for concentration of dioxins and concentration of hydrogen chloride. The results are shown in Table 8 below. The gas samples so collected were forwarded to Tottori Prefecture Group of Insurance Enterprises, an incorporated foundation which was entrusted with the task of determining the concentration of dioxins and the concentration of hydrogen chloride in the effluent gas. The gas samples were separately forwarded to Hiroshima Prefecture Environment Insurance Society, an incorporated foundation which was entrusted with the task of determining the concentration of dioxins in the effluent gas. (This procedure applies similarly herein below.)

The concentration of dioxins was rated with respect to TEQ (toxic equivalents), i.e. the total of the magnitudes of toxicity of the respective homologs of dioxins as reduced to 2,3,7,8-tetrachlorobenzoparadioxin, reported in the denomination of ng-TEQ/$m^3$N.

Control 2

Two plates obtained in the same manner as in Control 1 were fixed to the upper part of the interior of a general-purpose small to medium waste incinerator (made by Mochigase Electric Technical Co., Ltd.) as illustrated in Fig. 3. In this incinerator, 100 kg of solid urban waste containing 5 kg of vinyl chloride was placed and incinerated therein at a furnace interior temperature of 650°C. At proper intervals following the start of combustion, the effluent gas of the incinerator was collected and tested for concentration of dioxins and concentration of hydrogen chloride. The results are shown in Table 8 below.

Control 3

An experimental incineration was performed by following the procedure of Example 3 while omitting the use of the two plates obtained in the same manner as in Example 1. At proper intervals following the start of the combustion, the effluent gas was collected. The gas samples were tested for the concentrations of dioxins and chlorine component. The results of this test are shown in Table 8 below.

Example 4

In a general-purpose small to medium waste incinerator, 100 kg of solid urban waste containing 5 kg of vinyl chloride was placed and 5 kg of particles of dioxin generation depressant obtained in the same manner as in Example 2 was further placed and they were incinerated together therein at a furnace interior temperature of 650°C. At proper intervals following the start of the combustion, the effluent gas of the incinerator was collected and tested for concentration of dioxins and concentration of hydrogen chloride. The results are shown in Table 8 below.

Table 8

| | | Example 3 | Example 4 | Control 2 | Control 3 |
|---|---|---|---|---|---|
| Kind of incinerator | | General-purpose incinerator | General-purpose incinerator | General-purpose incinerator | General-purpose incinerator |
| Dioxin generation depressant | Presence of use | Yes | Yes | Yes | No |
| | Presence of porous mass | Yes | Yes | No | No |
| | Mode of use | Plates | Particles (burned together with the waste for incineration) | Plates | - |
| Average amount of hydrogen chloride generated (ppm) | | 0.03~0.09 | 0.03~0.09 | 0.06~0.15 | 50~70 |
| Toxic equivalents concentration in effluent gas (TEQ/$m^3N$) | | 0.05~0.20 | 0.07~0.20 | 0.5~0.7 | 30~50 |

## Claims

1. A dioxin generation depressant capable of repressing dioxins generated by an incinerating or heating treatment of waste, characterized by being a porous substance having a pore volume determined by the mercury injection method in the range of 0.45 - 1.8 ml/g and

   comprising at least one basis selected from the group consisting of calcined dolomite having magnesium oxide and calcium carbonate as main components and dolomite in the range of 35 - 65 wt. %, a binding agent in the range of 35 - 65 wt. %, and an activator formed of at least one member selected from the group consisting of titanium oxide and zinc oxide in the range of 5 - 15 wt. % based on the dioxin generation depressant.

2. A dioxin generation depressant according to claim 1, wherein said basis further comprises calcined dolomite having magnesium oxide and calcium oxide in the range of not more than 40 wt. % bases on the basis.

3. A dioxin generation depressant according to claim 1 or claim 2, wherein said binding agent is a clayish mineral having silica and/or alumina as main components in the range of 100 - 40 wt. % based on the clayish mineral.

4. A dioxin generation depressant according to claim 1 or claim 2, wherein the BET specific surface area is in the range of 10 - 50 $m^2/g$.

5. A dioxin generation depressant according to claim 1 or claim 2, which is in the form of plates.

6. A dioxin generation depressant according to claim 1 or claim 2, which is in the form of particles having an average particle size in the range of 5 - 30 mm.

7. A method for the production of a dioxin generation depressant, characterized by mixing 100 parts by weight of a raw material comprising at least one basis selected from the group consisting of calcined dolomite having magnesium oxide and calcium carbonate as main components and dolomite and a binding agent formed of a clayish mineral having silica and/or alumina as a main component with 0.1 - 20 parts by weight of a volatile component and subsequently calcining the resultant mixture at a temperature in the range of 500 - 750°C.

8. A method according to claim 7, wherein said volatile component is an aromatic compound.

9. A method according to claim 7, wherein said raw material further contains an activator formed of at least one member selected from the group consisting of titanium oxide and zinc oxide in an amount in the range of 5 - 15 wt. % based on said raw material.

10. A method for the repression of generation of dioxins, characterized by placing a dioxin generation depressor set forth in any of claims 1 - 6 in advance in an incinerate or a heating device and subjecting waste to an incinerating treatment or a heating treatment thereby effecting repression of dioxins generated in consequence of said treatment.

FIG.1

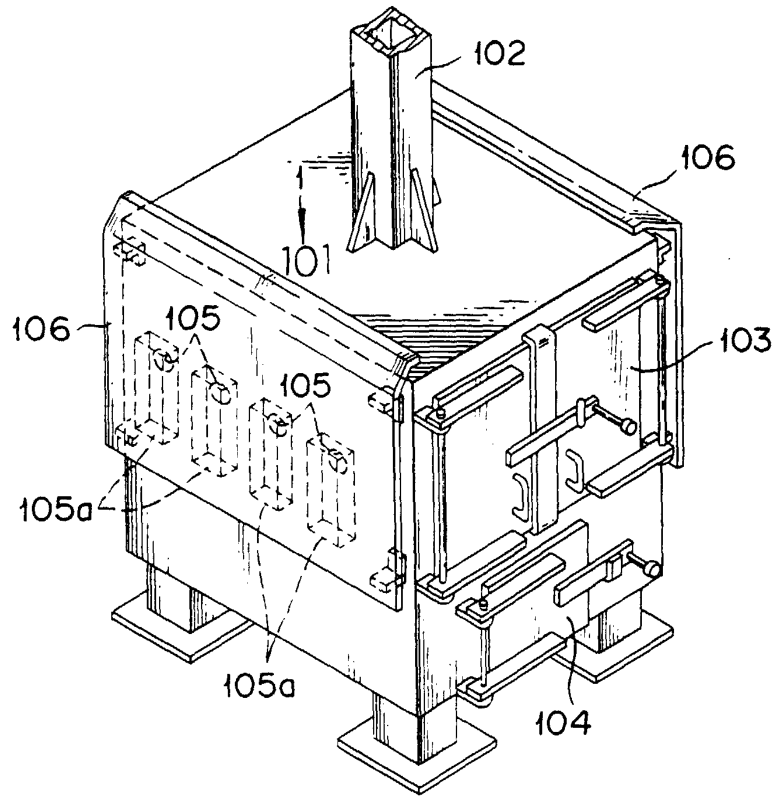
102
106
101
106
105
105
103
105a
105a
104

FIG.2

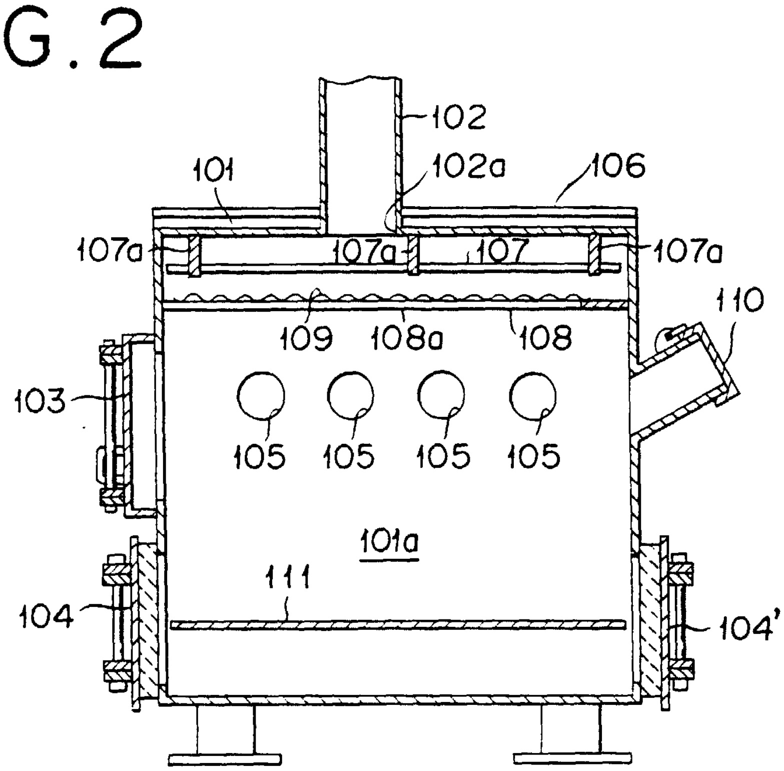
102
101
102a
106
107a
107a
107
107a
110
109
108a
108
103
105
105
105
105
101a
111
104
104'

FIG. 3

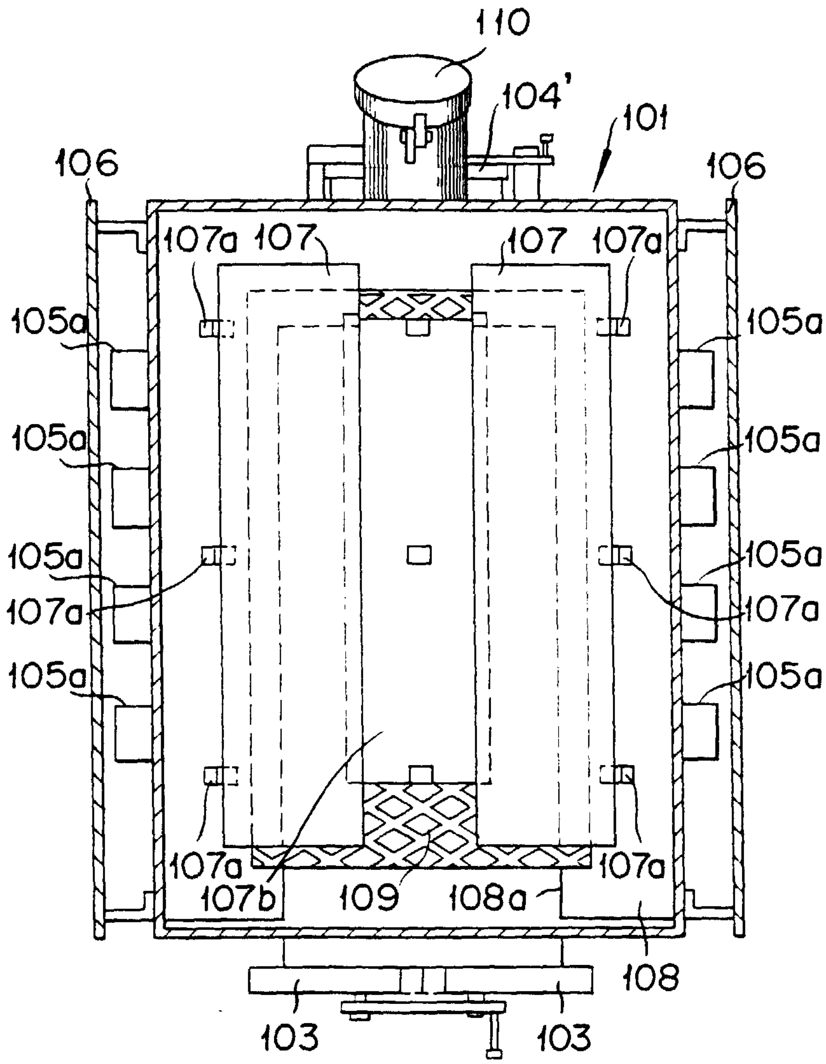
110
104'
101
106
106
107a
107
107
107a
105a
105a
105a
105a
105a
105a
105a
107a
107a
105a
105a
107a
107a
107b
109
108a
108
103
103

FIG.4

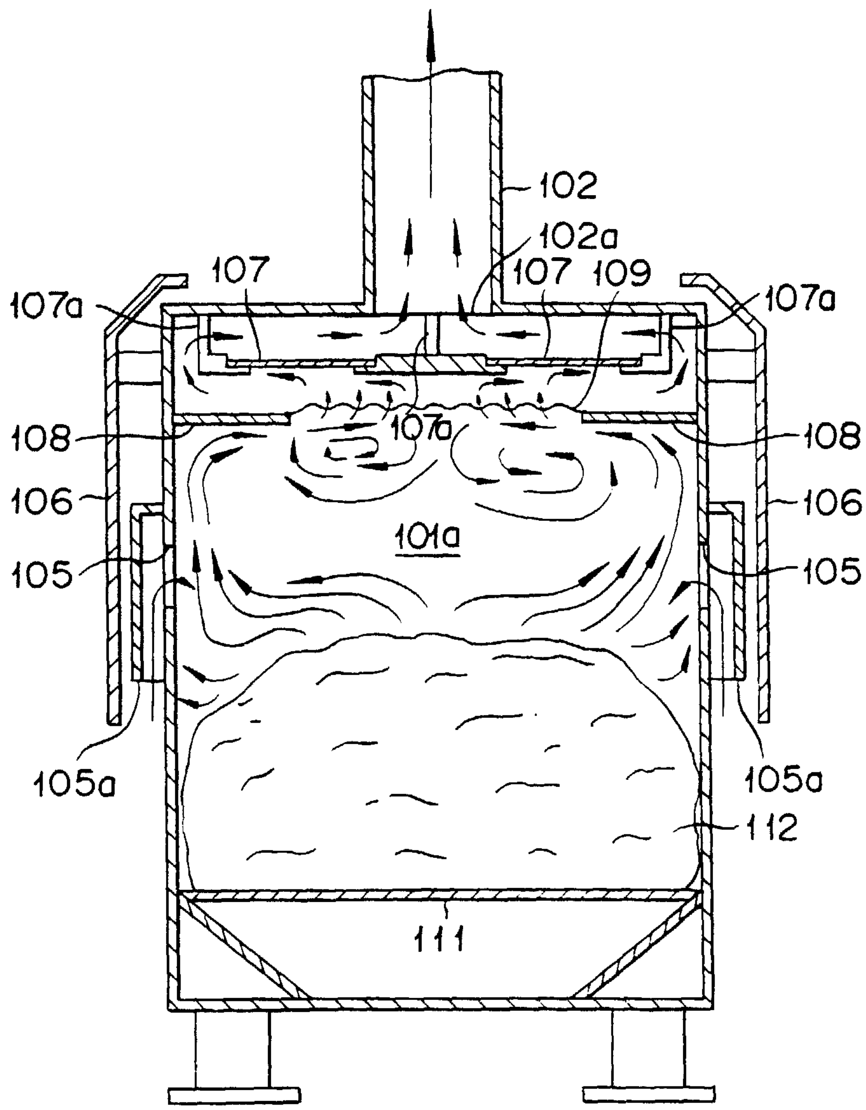
102
102a
107
107
109
107a
107a
107a
108
108
106
106
105
105
101a
105a
105a
112
111

FIG.5

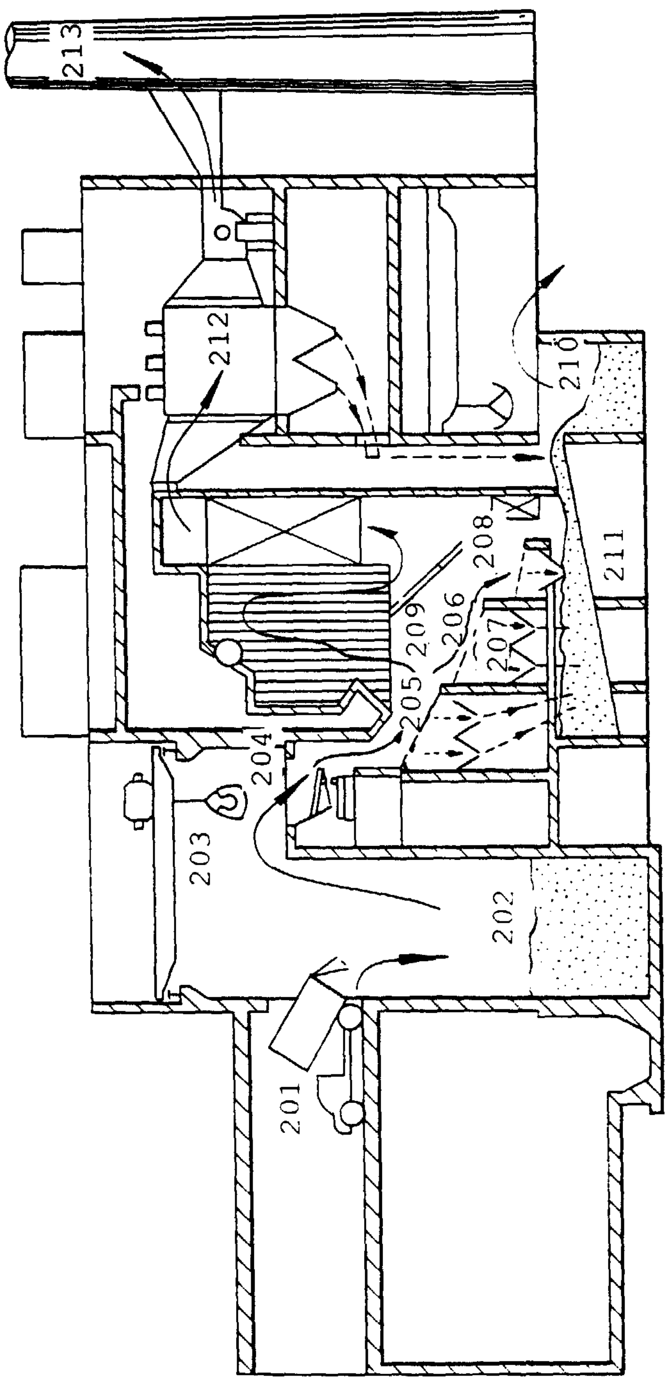

FIG.6

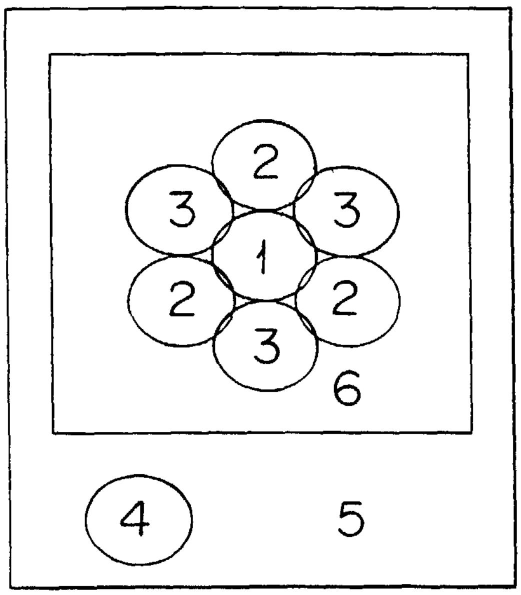

European Patent Office

# EUROPEAN SEARCH REPORT

Application Number
EP 99 30 9366

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 42 08 821 A (SISTEMAS IBERICOS DE RESIDUOS) 13 May 1993 (1993-05-13)<br>* column 4, line 34 - line 45; claims * | 1,10 | B01D53/70<br>F23J7/00<br>F23J15/00 |
| A | EP 0 866 271 A (NKK CORPORATION)<br>23 September 1998 (1998-09-23) | | |
| A | DE 34 43 722 A (KLAUS MANGOLD ET AL)<br>12 June 1986 (1986-06-12) | | |
| | | | TECHNICAL FIELDS SEARCHED (Int.Cl.7) |
| | | | B01D<br>F23J<br>C10L |

The present search report has been drawn up for all claims

| Place of search | Date of completion of the search | Examiner |
|---|---|---|
| THE HAGUE | 1 March 2000 | Bogaerts, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 30 9366

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2000

| Patent document cited in search report | Publication date | Patent family member(s) | Publication date |
|---|---|---|---|
| DE 4208821 A | 13-05-1993 | ES 2036480 B | 16-12-1993 |
| | | AT 398778 B | 25-01-1995 |
| | | AT 37192 A | 15-06-1994 |
| | | BE 1005574 A | 09-11-1993 |
| | | CA 2061873 A | 09-05-1993 |
| | | CH 684484 A | 30-09-1994 |
| | | DK 3192 A | 09-05-1993 |
| | | ES 2128894 A | 16-05-1999 |
| | | FI 915800 A | 09-05-1993 |
| | | FR 2683546 A | 14-05-1993 |
| | | IT 1250563 B | 20-04-1995 |
| | | LU 88108 A | 15-10-1992 |
| | | MX 9201874 A | 01-05-1993 |
| | | NL 9102121 A | 01-06-1993 |
| | | NO 914848 A | 10-05-1993 |
| | | PT 99938 A | 31-05-1993 |
| | | SE 9200535 A | 09-05-1993 |
| EP 866271 A | 23-09-1998 | JP 10259901 A | 29-09-1998 |
| DE 3443722 A | 12-06-1986 | NONE | |

EPO FORM P0459

For more details about this annex : see Official Journal of the European Patent Office, No. 12/82